Europäisches Patentamt

European Patent Office

Office européen des brevets

(19)

(11) Numéro de publication : **0 448 480 A1**

(12)

# DEMANDE DE BREVET EUROPEEN

(21) Numéro de dépôt : **91400786.9**

(22) Date de dépôt : **22.03.91**

(51) Int. Cl.$^5$ : **H04N 3/233**, H04N 9/28, H04N 17/04

(30) Priorité : 23.03.90 FR 9003745

(43) Date de publication de la demande :
25.09.91 Bulletin 91/39

(84) Etats contractants désignés :
CH DE FR GB LI

(71) Demandeur : THOMSON-CSF
51, Esplanade du Général de Gaulle
F-92800 Puteaux (FR)

(72) Inventeur : Fouche, Yvon
THOMSON-CSF, SCPI-CEDEX 67
F-92045 Paris la Defense (FR)
Inventeur : de Couasnon, Tristan
THOMSON-CSF, SCPI-CEDEX 67
F-92045 Paris la Defense (FR)
Inventeur : Eouzan, Jean-Yves
THOMSON-CSF, SCPI-CEDEX 67
F-92045 Paris la Defense (FR)

(74) Mandataire : Turlèque, Clotilde et al
THOMSON-CSF SCPI
F-92045 PARIS LA DEFENSE CEDEX 67 (FR)

(54) **Dispositif de visualisation par projection à boucle de contre-réaction pour la correction de l'ensemble des défauts de l'image projetée.**

(57)   L'invention concerne un dispositif de visualisation par projection muni d'une chaîne de contre-réaction destiné à corriger l'ensemble des défauts que présente l'image projetée, ces défauts résultant tant des tubes de projection et de leurs optiques (défauts de géométrie ou de focalisation) que des différences entre ces tubes (défauts de convergence, colorimétrie, uniformité de brillance). La chaîne de contre-réaction comporte un moyen générateur (6) d'une image de mire test, un moyen de reprise (3) de toute l'image projetée et des moyens de comparaison (4) des signaux issus de l'image test et de l'image reprise ; des signaux de correction sont élaborés à partir de cette comparaison et sont appliqués aux différents circuits de commande (5) définissant les caractéristiques de projection.

   Le dispositif selon l'invention est utilisé également à la poursuite en temps réel des réglages obtenus dans une phase préalable à la projection de la séquence d'images vidéo utiles.

   L'invention s'applique notamment aux vidéo- projecteurs, aux dispositifs de visualisation par rétro-projection ou aux tubes beam-index.

EP 0 448 480 A1

# FIG_1

# DISPOSITIF DE VISUALISATION PAR PROJECTION A BOUCLE DE CONTRE-REACTION POUR LA CORRECTION DE L'ENSEMBLE DES DEFAUTS DE L'IMAGE PROJETEE

La présente invention se rapporte au domaine de la visualisation d'images et en particulier aux dispositifs de visualisation par projection utilisant un vidéo projecteur comportant plusieurs tubes de projection (au moins un groupe de trois tubes pour les trois composantes rouge, vert et bleu).

Les dispositifs de visualisation par projection, fournissent une image qui présente des défauts de géométrie, de convergence, de focalisation, de colorimétrie et d'uniformité résultant tant des défauts des tubes de projection eux-mêmes et de leurs optiques que des différences de caractéristiques de ces tubes qui entraînent une mauvaise superposition des couleurs. Ces défauts nécessitent des corrections afin d'obtenir une image de qualité en tout point de sa surface.

Pour pallier ces inconvénients, sans recourir à de délicats réglages manuels, il a été proposé d'utiliser une boucle de contre-réaction permettant, à partir d'un dispositif de reprise d'images, de détecter puis de corriger automatiquement certains de ces défauts. Ce procédé de détection de défauts est basé sur une analyse séquentielle de pixels de références équirépartis sur une image test projetée ; un tel traitement ne permet pas d'analyser les variations dues aux non-uniformités sur l'ensemble d'une image, comme la non-uniformité de brillance ou de colorimétrie, mais permet seulement d'analyser les variations de forme notamment de géométrie, de convergence ou de focalisation ; de plus, les variations dues à la dérive temporelle de la localisation du pixel, par exemple du fait des dérives thermiques affectant les caractéristiques des tubes de projection, ne peuvent être corrigées sans annexer un traitement d'autocorrélation complexe ; il s'ensuit qu'on ne peut, à l'aide d'un tel système, réaliser une correction complète sur l'ensemble de l'image projetée. En particulier, une correction d'uniformité de brillance ou une correction de colorimétrie n'est pas possible.

L'objet de l'invention est un dispositif de détection et de correction de l'ensemble des défauts d'une image projetée qui utilise également une contre-réaction pour la mesure et la correction des défauts, mais dans lequel le dispositif de reprise d'image permet la reprise complète d'une image test, en une seule fois ou par zones ; l'analyse de l'image test projetée reprise permet alors de déterminer les corrections à apporter et des circuits adaptés appliquent les corrections correspondant aux circuits de commande des tubes de projection. Pour atteindre ce résultat, le dispositif de visualisation par projection à boucle de contre-réaction selon l'invention est caractérisé en ce qu'il comprend un moyen générateur de mire test, des moyens de couplage pour projeter soit la mire test soit l'image utile, un moyen de reprise de toute l'image projetée, des moyens de mesure et d'analyse de l'image reprise pour mesurer, calculer et fournir des signaux de correction aux circuits de commande numérique, qui définissent les caractéristiques de projection.

D'autres caractéristiques et avantages de la présente invention apparaîtront à la lecture de la description détaillée qui va suivre, donnée à titre d'exemple non limitatif en référence aux figures annexées qui représentent respectivement :

– la figure 1, le schéma illustrant le principe de l'invention ;
– la figure 2, les moyens de corrections des défauts de géométrie et de convergence ;
– les figures 3a et 3b, des diagrammes illustrant un exemple de défauts de distorsion géométriques sur des éléments de la première mire ;
– la figure 4, les moyens de correction de focalisation dynamique ;
– la figure 5, le schéma d'un motif d'une seconde mire de référence utilisée pour la correction de focalisation dynamique ;
– les figures 6a et 6b, des diagrammes mettant en évidence les défauts de focalisation dynamique ;
– les figure 7 et 8, deux variantes possibles pour le suivi en temps réel des corrections à apporter.

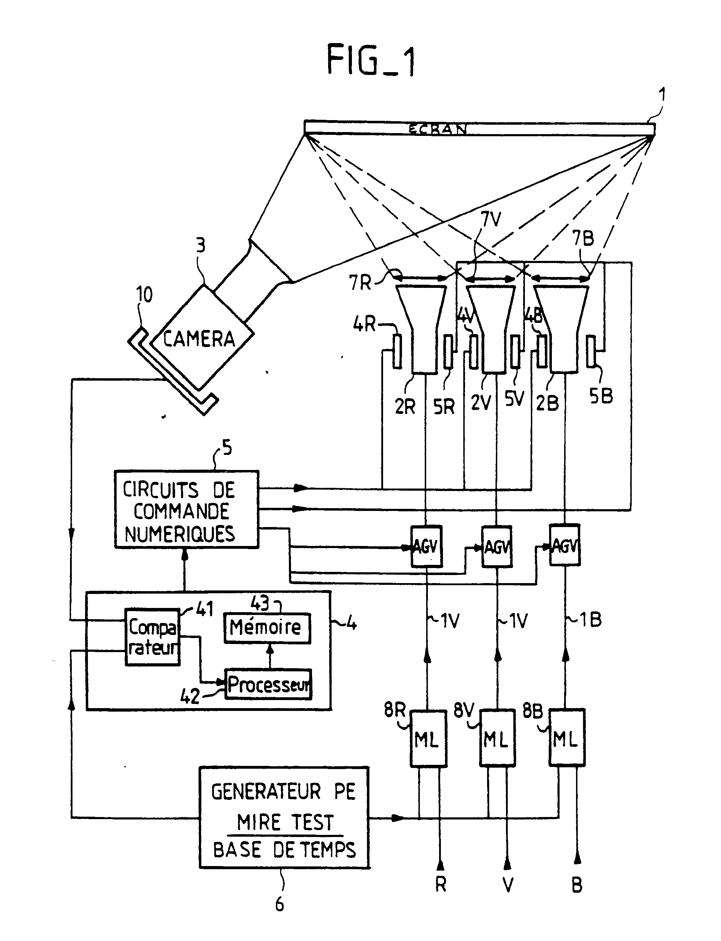

La figure 1 illustre le principe de l'invention appliqué à un vidéo projecteur comportant : un écran de projection 1, trois tubes de projection 2R, 2V ,2B, pour le rouge, le vert et le bleu (R, V, B ), respectivement associés à trois systèmes optiques de projection symbolisés par les lentilles 7R, 7V, 7B. Dans un tel dispositif, chaque composante R, V, B du signal vidéo utile est amplifiée sur chaque voie correspondante 1R, 1V et 1B, grâce à un amplificateur à gain variable (AGV), respectivement 3R, 3V et 3B, puis attaque l'entrée de chaque tube ; des circuits de commande numérique 5 comprennent des circuits de commande de balayage horizontal et vertical par application des courants en dents de scie dans les bobines de déviation des faisceaux d'électrons 4R, 4V, 4B, un circuit de commande de focalisation dynamique qui applique des tensions aux bobines correspondantes 5R, 5V, 5B et des circuits pour moduler chaque amplificateur à gain variable (AVG).

L'invention consiste à ajouter à ce système de projection une boucle de contre-réaction reprenant une image complète qui, par analyse de la mire projetée ou de marqueurs incrustés, va permettre d'introduire des valeurs de correction dans tous les circuits de commande cités, afin d'obtenir une image totalement corrigée.

Selon l'invention, le dispositif comporte à cet effet un générateur de mire test 6 muni d'une base de temps pour piloter les synchronisations de lignes et de trames, des multiplexeurs lents ML, respectivement 8R, 8V, 8B, sur chaque voie vidéo pour coupler soit la composante R, V ou B du signal vidéo sur une première entrée, soit les signaux provenant du générateur de mire 6 sur une seconde entrée, une caméra vidéo 3 de reprise complète de l'image projetée, et un dispositif d'analyse 4 qui reçoit, d'une part, les signaux provenant de la caméra 3 et, d'autre part, ceux issus du générateur de mire 6.

Lors d'un réglage préalable, les multiplexeurs ML transmettent les signaux de test provenant du générateur de mire 6 aux tubes de projection, la caméra vidéo assure la reprise totale de l'image de la mire test projetée sur l'écran 1 et le dispositif d'analyse 4 mesure, grâce à un comparateur 41, des écarts de temps ou d'amplitude entre les signaux provenant respectivement de la caméra 3 et du générateur de mire 6 ; à partir de ces écarts, le dispositif 4 calcule et mémorise, grâce au processeur 42 et à la mémoire 43, un ensemble de signaux de correction à apporter aux caractéristiques spatiales, de colorimétrie et de brillance de l'image projetée par l'intermédiaire des circuits de commande 5. Le dispositif 4 contient également des informations d'initialisation destinées, dans un premier temps, à corriger les défauts propres, à la caméra et à son optique, si bien que les erreurs mesurées ne sont imputables qu'aux tubes et optiques de projection.

Dans le cas où la caméra présente une résolution plus faible que celle de l'image à analyser, l'image projetée est découpée en plusieurs zones que la caméra analyse séquentiellement ; le repérage de chaque zone se fait en plaçant un marqueur (par exemple le centre de la zone) au centre de l'image délivrée par la caméra grâce à un système de pointage 10 constitué d'une platine micro-contrôle.

Dans une première phase, le dispositif selon l'invention initialise les valeurs de correction à apporter puis, dans une seconde phase, poursuit l'évaluation de ces valeurs en temps réel.

Il convient d'abord de décrire, plus précisément, les moyens adaptés à la correction de chacun des défauts relevés.

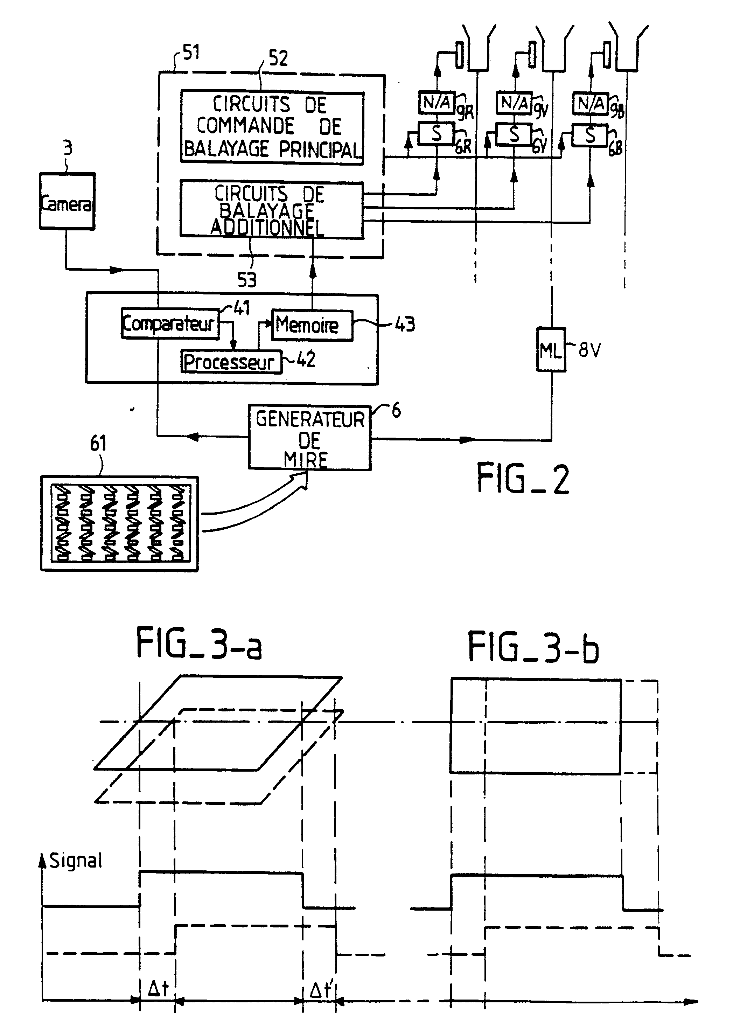

En ce qui concerne la correction de géométrie, la boucle de contre-réaction comprend comme circuits de commande, et en référence à la figure 3, des circuits de commande de balayage horizontal et vertical 51 comportant des circuits de commande de balayage numériques principaux 52 communs aux trois voies et des circuits de commande de balayage numériques additionnels 53 pour chaque voie ; la connaissance a priori de la loi de distorsion géométrique (par exemple en coussin) permet de prédistordre le balayage principal, les corrections fines étant confiées aux circuits de balayage additionnels.

Le mode opératoire auquel obéit le dispositif selon l'invention appliqué à la correction des distorsions géométriques, connu en soi, est le suivant : un signal vidéo représentatif d'une mire de correction de géométrie est appliqué à l'entrée du tube de projection vert qui va servir de référence ; cette mire classique, référencée 61 sur la figure 2 se compose de lignes successives de losanges et de rectangles, les losanges étant alternativement inclinés d'une ligne à la ligne suivante.

Les erreurs dues aux distorsions géométriques de la voie verte sont évaluées au niveau du comparateur du dispositif d'analyse comme l'illustrent les figures 3a et 3b qui représentent un losange et un rectangle de la mire, respectivement en traits pleins pour la mire de référence et en traits pointillés pour la mire projetée et reprise, ainsi que les signaux correspondants détectés ; les figures géométriques sont supposées à la luminance maximale sur fond noir. Les écarts temporels entre les transitions avant et arrière des signaux ($\Delta t$ et $\Delta t'$ sur la figure 3a ) sont mesurés pour un même motif géométrique, ces transitions correspondant à une variation de luminance et la moyenne entre l'écart temporel correspondant aux transitions avant et l'écart temporel correspondant aux transitions arrière de chaque motif géométrique est attribuée au barycentre du motif géométrique correspondant ; les valeurs ainsi mesurées doivent être corrigées du temps de transit-mire, génération d'image, reprise d'image - qui provoque un décalage temporel. A partir de ces valeurs fournies par le comparateur 41, le processeur 42 calcule les signaux de correction à apporter afin de corriger les erreurs de positionnement desdits barycentres.

D'autres signaux de correction sont obtenus à partir d'un polynôme d'interpolation pour former un ensemble complet de signaux de correction ; ces signaux sont transmis, après synchronisation et par l'intermédiaire de la mémoire 43, aux circuits de commande de balayage numérique additionnel 53 de chaque voie R, V, B avant d'être sommées par des sommateurs S 6R, 6V et 6B, aux signaux définis par le circuit de commande de balayage principal 52 pour fournir les caractéristiques spatiales de projection ; après conversion en analogique grâce à des convertisseurs numériques-analogiques N/A (9R, 9V, 9B), les signaux de sortie des sommateurs définissent les tensions corrigées appliquées aux bobines de balayage horizontal et vertical. Pour les voies rouge et bleue, les corrections différentielles de distorsion géométrique seront effectuées avec les corrections de convergence pour ne pas avoir à réitérer des traitements similaires.

Les défauts de convergence proviennent de la non superposition des trois images formées par les trois faisceaux rouge, vert et bleu ; la mire électronique précédemment utilisée est appliquée simultanément à l'entrée des voies verte et rouge ; les écarts temporels entre les mires projetées par les tubes rouge et vert sont mesurés par le dispositif d'analyse après reprise de l'image par la caméra, le tube vert servant de référence ; le même traitement que celui effectué lors de la correction de distorsion de géométrie permet de déduire les valeurs des coefficients de correction additionnels à appliquer aux circuits de commande additionnel de balayage du tube rouge. La même opération doit être reconduite entre les tubes bleu et vert afin d'obtenir une superposition des trois images projetées par les trois tubes.

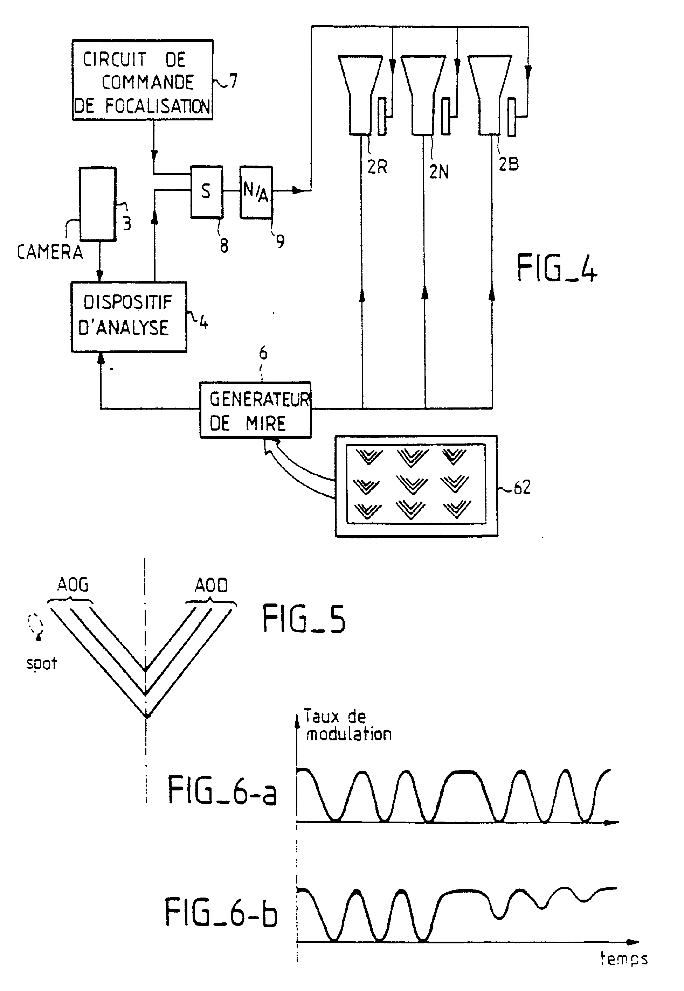

Pour la correction de focalisation et d'astigmatisme dynamiques, il s'agit d'effectuer une optimisation de la focalisation, en fonction de la position d'une zone d'image considérée, pour chaque tube de projection ; dans ce but, une deuxième mire électronique telle qu'illustrée par les figures 4 et 5 est projetée successivement par chacun des tubes : cette mire référencée 62 sur la figure 4 comporte des motifs de chevrons superposés, chaque chevron comprenant une aile oblique gauche (AOG) et une aile oblique droite (AOD) ; lorsque la focalisation et l'astigmatisme du spot sont corrects sur tout le tube, la caméra de reprise d'image délivre un signal dont les taux de modulation représentés figure 6a, sont égaux pour les deux ailes AOG et AOD. Lorsque la focalisation et l'astigmatisme ne sont pas optimalisés (spot en ellipse d'axe variable représentée en pointillé sur la figure 5), les taux de modulation pour les deux ailes AOG et AOD ne sont pas égaux et l'on obtient, à la sortie de la caméra de reprise de la mire projetée, le signal représenté sur la figure 6b. Pour optimiser la focalisation il est procédé alors comme suit, en référence à la figure 4 : le dispositif d'analyse 4 mesure les écarts d'amplitude des taux de modulation du signal et calcule les corrections à apporter pour que les taux de modulation AOG et AOD soient égaux pour chacun des motifs de la mire, la focalisation étant ainsi optimisée sur toute l'image ; les valeurs de correction sont ajoutées, grâce à un sommateur S 8, à la valeur de commande de focalisation issue du circuit de commande 7 ; les valeurs ainsi corrigées sont appliquées à un convertisseur numérique-analogique N/A 9 qui délivre le signal de commande analogique de focalisation aux tubes de projection 2R, 2V, 2B.

Les corrections de colorimétrie et d'uniformité de brillance sont mises en oeuvre en référence à la figure 1 par réglage des amplificateurs à gain variable (AGV) associés à chaque tube ; pour la correction de colorimétrie, un signal R, V ou B correspondant au niveau de référence du blanc est projeté séquentiellement, sur les trois tubes de projection ; le dispositif 4 mesure ensuite, par l'intermédiaire de la caméra 3, l'amplitude du signal vidéo de retour et le compare à l'amplitude du signal vidéo initial. Le gain de chacune des voies est alors ajustée de façon à obtenir un blanc correspondant à la température de couleur souhaitée.

Pour atteindre l'uniformité de brillance, le signal associé à la mire utilisée pour les distorsions de géométrie et de convergence est transmis aux trois voies ; cette mire contient les formes géométriques représentées sur la figure 2 qui présentent, en cas de non uniformité de brillance de l'image, des brillances différentes ; l'analyse comparée des brillances des formes- faite par le dispositif d'analyse 4 permet de définir les valeurs à appliquer aux trois amplificateurs à gain variable AGV de façon à obtenir une uniformité des blancs. L'ensemble des valeurs à appliquer est complété par interpolation, pour les points qui n'appartiennent pas aux motifs analysés, à partir de résultats correspondants aux différents motifs de mesure.

Cette phase de correction préalable étant achevée, la vidéo-projection peut alors commencer. Le dispositif selon l'invention permet en outre de suivre en temps réel l'ensemble des corrections automatiques obtenues dans la phase d'initialisation de façon à s'affranchir si nécessaire des dérives thermiques ; pour ce faire, des écarts temporels sont mesurés pour un certain nombre de points des images vidéo projetées sans gêner leur perception ; trois solutions techniques mettant en oeuvre le dispositif de l'invention vont être décrites.

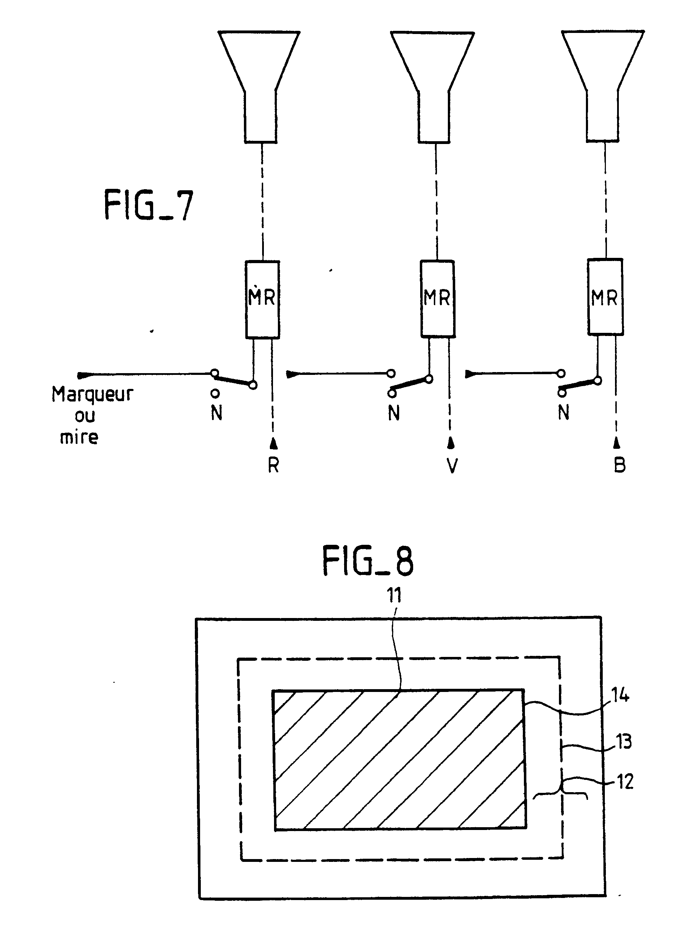

La première solution, illustrée à la figure 7 utilise les mêmes moyens que ceux décrits en référence à la figure 1, en substituant des multiplexeurs rapides MR aux multiplexeurs lents ML précédents ; ces multiplexeurs rapides MR vont incruster, comme représenté sur figure 9, des marqueurs correspondant à un point blanc sur une première voie et à un point noir N sur les deux autres voies pour un point image donné ; puis on permute séquentiellement l'affectation (noir, blanc ) adoptée afin de tester successivement chaque tube. Cette opération est reconduite sur un ensemble de points de l'image avec une récurrence assez lente de façon à ne pas provoquer de persistance visuelle. Grâce au dispositif de pointage de caméra 10 et à un agrandissement pour repérer les incrustations, les écarts spatiaux entre les positions des points blancs incrustés et leurs positions théoriques sont mesurés par le dispositif d'analyse 4 ; ce dispositif calcule les valeurs de correction adaptées à appliquer aux différents circuits de commande comme lors de la phase de correction préalable (à l'exception de la correction de focalisation).

La seconde solution, illustrée par la figure 8, repose sur une mise en oeuvre différente : le cadre 14 du tube de projection correspondant au format d'image envisagé, par exemple format 16x9 de TVHD, définit deux zones, une première zone 11 située à l'intérieur de ce cadre et une seconde zone 12 entourant à l'extérieur du cadre 14 ; à l'intérieur de la première zone, le tube de projection est équipé d'un phosphore émettant dans le visible et, à l'extérieur de cette zone 11, d'un phosphore émettant un rayonnement non visible, proche infrarouge ou ultraviolet.

Un léger surbalayage du tube sur la zone limitée par le trait en pointillé 13 sans que cette excitation soit perceptible. Les points correspondant au tube vert, puis rouge et enfin bleu sont activés séquentiellement, et les écarts temporels existant entre les différents points émanant des différents tubes sont mesurés, la caméra représentant une image élargie par rapport à l'image utile et conservant une certaine sensibilité au rayonnement proche infrarouge ou ultraviolet ; à partir des valeurs des écarts temporels on procède à la même élaboration des coefficients de correction que dans le cadre de la phase de correction préalable.

Une variante de cette mise en oeuvre (non représentée) consiste à incruster des motifs de phosphore émettant dans le proche infrarouge ou ultraviolet dans l'écran des tubes de projection : le repérage spatial des points servant de base aux mesures d'écarts temporels se fait alors à l'intérieur de la zone utile.

L'invention n'est pas limitée aux modes de réalisation précisément décrits et représentés. En particulier, les moyens de correction utulisés peuvent être différents de ceux décrits sans sortir du cadre de l'invention. De plus, l'utilisation d'une caméra vidéo qui aurait une résolution aussi bonne que l'image projetée afin de reprendre en une seule fois l'image projetée, ce qui permet de s'affranchir du dispositif de pointage pour une acquisition d'image par zone, ou l'application de l'invention à d'autres dispositifs de visualisation ( rétro- projection, tube beam-index) est à la portée de l'homme de l'art.

## Revendications

1. Dispositif de visualisation par projection à boucle de contre-réaction pour la détection et la correction de l'ensemble des défauts de l'image projetée, caractérisé en ce qu'une telle boucle comporte un moyen générateur d'une mire test, des moyens de couplage pour projeter soit la mire test soit l'image utile, un moyen de reprise de toute l'image projetée, des moyens de mesure et d'analyse de l'image reprise incluant des moyens de comparaison de l'image test et de l'image reprise associés à un processeur pour le calcul de signaux de correction à appliquer aux circuits de commande définissant les caractéristiques de projection.

2. Dispositif selon la revendication 1 appliqué à un vidéo-projecteur comprenant trois tubes de projection associés respectivement à trois voies vidéo couleur à superposer, caractérisé en ce que le moyen de reprise d'image est constitué par une caméra vidéo (3) et en ce que les moyens de comparaison (41) mesurent des écarts temporels et d'amplitude entre les transitions de signaux d'image provenant respectivement de la caméra (3) et du générateur de mire ( 6 ).

3. Dispositif selon la revendication 2 appliqué à la correction des distorsions géométriques, caractérisé en ce que un signal correspondant à une première mire test (61) constituée de motifs géométriques caractéristiques est appliqué à une voie servant de référence, en ce que le dispositif d'analyse (4) mesure des écarts temporels entre signaux associés à un même motif géométriques de la mire (61) dans l'image test et dans l'image reprise, et en ce que les circuits de commande (51) comportent des circuits de commande de balayage numériques horizontal et vertical principaux (52) communs aux trois voies, des circuits de commande de balayage numériques additionnels ( 53 ) pour chacune des voies, des sommateurs (6R, 6V, 6B) pour ajouter les valeurs numériques des caractéristiques spatiales de projection et des convertisseurs numériques-analogiques (9R, 9V, 9B) pour appliquer une tension corrigée aux bobines de balayage horizontal et vertical des trois voies.

4. Dispositif selon la revendication 3, caractérisé en ce que les écarts temporels sont mesurés entre les transitions avant et entre les transitions arrière des signaux associés à un même motif géométrique, en ce que la moyenne entre l'écart des transitions avant et l'écart des transitions arrière de chaque motif géométrique est attribuée au barycentre du motif géométrique correspondant de la mire (61), en ce que le dispositif d'analyse (4) calcule les valeurs de correction relatives aux positionnements desdits barycentres ainsi que des valeurs intermédiaires à partir d'un polynôme d'interpolation pour former un ensemble complet de valeurs de correction à apporter aux caractéristiques spatiales des balayages.

5. Dispositif selon la revendication 2 appliqué à la correction de convergence, caractérisé en ce que le signal de la mire test (61) est appliqué simultanément à l'entrée de la voie de référence et d'une deuxième voie, puis simultanément à l'entrée de la voie de référence et d'une troisième voie et en ce que les signaux de correction calculés et mémorisés par le dispositif d'analyse (4) sont appliqués successivement aux circuits de balayage du tube associé à la deuxième voie, puis du tube associé à la troisième voie.

6. Dispositif selon la revendication 5 caractérisé en ce que les signaux de correction, calculés pour corriger le balayage du tube associé à la deuxième voie puis le balayage du tube associé à la troisième voie, sont utilisés également pour la correction différentielle des distorsions géométriques de ces tubes par rapport à la correction préalablement effectuée sur le tube associé à la voie de référence et reprise sur les deux autres tubes conformément à la revendication 3.

7. Dispositif selon la revendication 2 appliqué à la correction de focalisation dynamique caractérisé en ce que le signal d'une seconde mire test (62) est appliqué successivement sur chacun des tubes R, V, B, en ce que le dispositif d'analyse (4) mesure les écarts d'amplitude des taux de modulation du signal pour chaque motif de la mire (62) et calcule les valeurs de correction pour égaliser les taux de modulation relatifs à chacun de ces motifs, en ce que les valeurs de correction sont ajoutées à la valeur de commande de focalisation issue du circuit de commande de focalisation (7), les valeurs corrigées étant appliquées à un convertisseur numérique - analogique qui délivre le signal de commande analogique de focalisation aux tubes.

8. Dispositif selon la revendication 2 appliqué à la correction de colorimétrie, caractérisé en ce qu'un signal correspondant au niveau de blanc de référence est envoyé séquentiellement sur les trois tubes de projection, en ce que le dispositif d'analyse 4 mesure les écarts d'amplitude entre les signaux issus de la caméra et du signal de référence successivement pour chacun des tubes, et en ce que les signaux de correction issus du dispositif 4 sont appliqués aux circuits de commande des amplificateurs à gain variable pour atteindre la température de couleur souhaitée.

9. Dispositif selon la revendication 3 appliqué à la correction d'uniformité de brillance, caractérisé en ce que le signal de la première mire (61) est appliqué aux trois voies, en ce que les différences de brillance des formes géométriques de la mire (61) mesurées par le dispositif d'analyse (4) fournissent, à l'aide du même dispositif (4), des premières valeurs de correction qui, complétées par interpolation, sont transmises aux circuits de commande des amplificateurs à gain variable.

10. Dispositif selon la revendication 2 appliqué au suivi des corrections en temps réel, caractérisé en ce que des marqueurs blancs sur une voie et noirs sur les autres voies sont incrustés dans l'image projetée par couplage à l'aide de multiplexeurs rapides, en ce que la caméra opère par zone avec un agrandissement suffisant pour repérer les incrustations de blanc, en ce que les écarts temporels entre les signaux correspondant aux positions réelles et théoriques des incrustations sont mesurés par le dispositif d'analyse (4) et en ce que les valeurs de correction de géométrie, de convergence, de colorimétrie et d'uniformité de brillance sont calculées par le même dispositif d'analyse (4) et appliquées aux circuits de commande correspondants.

11. Dispositif selon la revendication 2 appliqué au suivi des corrections en temps réel, caractérisé en ce que des tubes de projection sont équipés d'un phosphore émettant dans le visible à l'intérieur d'une première zone utile (11) et d'un phosphore émettant dans le proche IR ou UV dans une seconde zone (12) entourant la première, en ce qu'un léger surbalayage dans une zone intermédiaire limitée par un contour 13 est effectué, en ce que le spot de balayage excite le phosphore en bordure de la zone utile (11), et en ce que les écarts temporels sont mesurés pour des points situés en dehors de la zone utile.

12. Dispositif selon la revendication 11, caractérisé en ce que le phosphore émettant dans le proche IR ou UV est incrusté sous forme de marqueurs dans la zone utile.

# FIG_1

FIG_2

FIG_3-a

FIG_3-b

Signal

$\Delta t$    $\Delta t'$

CIRCUIT DE
COMMANDE ~7
DE FOCALISATION

CAMERA ~3

S ~8   N/A ~9

2R   2N   2B

FIG_4

DISPOSITIF
D'ANALYSE ~4

6

GENERATEUR
DE MIRE

~62

AOG   AOD

FIG_5

spot

Taux de
modulation

FIG_6-a

FIG_6-b

temps

FIG_7

Marqueur
ou
mire

MR   MR   MR

N     N     N

R     V     B

FIG_8

11

14
13
12

Office européen
des brevets

# RAPPORT DE RECHERCHE EUROPEENNE

Numero de la demande

EP 91 40 0786

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|--------------------------------------------------------------------------------|-------------------------|--------------------------------------|
| X | US-A-4 485 394 (GHAEM-MAGHAMI et al.) * Document en entier * | 1 | H 04 N 3/233 H 04 N 9/28 H 04 N 17/04 |
| Y | | 2,3,5,8,10 | |
| A | --- | 4,6,11 | |
| Y | EP-A-0 280 302 (MATSUSHITA ELECTRIC INDUSTIAL CO.) * Colonne 2, ligne 13 - colonne 3, ligne 3 * | 2,3,5,8,10 | |
| A | --- | 6,11 | |
| A | PATENT ABSTRACTS OF JAPAN, vol. 12, no. 118 (E-600)[2965], 13 avril 1988; & JP-A-62 247 691 (MATSUSHITA ELECTRIC IND. CO., LTD) 28-10-1987 --- | 1-3,5,10 | |
| A | PATENT ABSTRACTS OF JAPAN, vol. 12, no. 265 (E-637)[3112], 23 juillet 1988; & JP-A-63 048 987 (NIPPON HOSO KYOKAI (NHK) 01-03-1988 --- | 1,2,4,5 | DOMAINES TECHNIQUES RECHERCHES (Int. Cl.5) |
| A | PATENT ABSTRACTS OF JAPAN, vol. 12, no. 256 (E-635)[3103], 19 juillet 1988; & JP-A-63 043 485 (NIPPON HOSO KYOKAI (NHK) 24-02-1988 --- | 1,2,4,5 | H 04 N |
| A | PATENT ABSTRACTS OF JAPAN, vol. 12, no. 280 (P-739)[3127], 2 août 1988; & JP-A-63 061 302 (SONY CORP.) 17-03-1988 --- -/- | 1,2,7 | |

Le présent rapport a été établi pour toutes les revendications

| Lieu de la recherche | Date d'achèvement de la recherche | Examinateur |
|----------------------|-----------------------------------|-------------|
| LA HAYE | 27-06-1991 | PIGNIEZ T.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

**Office européen des brevets**

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 6, no. 60 (E-102)[938], 17 avril 1982; & JP-A-56 169 984 (MATSUSHITA DENKI SANGYO K.K.) 26-12-1981 --- | 1,2,5 | |
| P,X | GB-A-2 233 866 (SAMSUNG ELECTRONICS CO., LTD) * Résumé * ----- | 1,2 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 27-06-1991 | PIGNIEZ T.J.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)